# EUROPEAN PATENT SPECIFICATION

(11) **EP 2 160 533 B1**
(45) Date of publication and mention of the grant of the patent: **11.09.2013**
(21) Application number: 08751332.1
(22) Date of filing: 02.06.2008
(51) Int. Cl.: F16K 11/20

(54) **VALVE CARTRIDGE**
VENTILPATRONE
CARTOUCHE

(30) Priority: 22.06.2007 TR 200704329
(43) Date of publication of application: 10.03.2010
(73) Proprietor: Valfsel Armatur Sanayi Anonim Sirketi, 45030 Manisa (TR)
(72) Inventor: COSAN, Ahmet, 45030 Manisa (TR); TUNCAY, Hakan, Cevat, 45030 Manisa (TR)
(74) Representative: Dericioglu Kurt, Ekin
(86) International application number: PCT/IB2008/052145
(87) International publication number: WO 2009/001239

(56) References cited:
- WO-A-2006/031006
- CH-A5- 648 390
- DE-U1- 8 702 286
- GB-A- 2 089 003
- KR-A- 20050 018 770
- US-A1- 2005 126 643

## Description

### Field of the Invention

The present invention relates to a cartridge where temperature and flow adjustments can be controlled independently from each other as there are provided separate temperature and flow adjusting shafts.

### Background of the Invention

There are various mechanisms in the state of the art, which can perform temperature and flow control. Some of these mechanisms control only the temperature and some others control only the flow. Temperature and flow controls can be performed by different packing boxes or by means of a control shaft within a cartridge. Since there is one inlet on the packing boxes, hot and cold water inlets are separate, thus flow controls are made by means of the shafts on the packing box. Linear flow and fixed temperature can not be attained. In cartridges, hot and cold water inlets are provided with two inlets and temperature and flow control is provided by horizontal and vertical movements of a single shaft. In these cartridges, it is not possible to fix the temperature.

In the Korean patent application No. KR20050018770, which is a state of the art, operating mechanism of the system is disclosed and it is stated that first of all hot and cold water are mixed and temperature adjusting is made, and then the flow adjusting is performed. These adjustments are performed by means of fixed and movable discs.

The USA patent application No. US5845674, which is another state of the art application, mentions about adjustability of temperature and flow independently from each other. The same application indicates both a flow control element and a temperature control element. There is provided a disk in the said cartridge for adjusting the temperature. The mechanism is fitted on a cast and metal body and comprises a complete armature. There is no assembling or dismantling. There are separate water mixing chambers within it. Water enters from the side and exits from the bottom. A linear flow does not occur. When temperature and flow adjustments are being made, after a certain degree of angle, the handles move together. Their movements are not independent.

The European patent application No. EP0311546, which is another state of the art application, discloses grooved mechanisms with sockets, arranged on the cartridge, used for adjusting maximum hot water limit and maximum flow. In the said system, hot and cold water enter from the bottom and the mixed water also exits from the bottom. Linear flow could not be performed in this present system. The movement coming to the ceramic disks operates with many actions like rotation and forward backward movement. The whole mechanism is a system whose components are interconnected with each other. It is not possible to perform an independent adjusting.

The prior art patent documents DE 87 02 286 U1, WO 2006/031006 A, GB-A-2 089 003 and CH 648 390 A5 disclose cartridges used for water temperature and flow adjustment.

However, the inventive mechanism can be assembled and dismantled into and out of the armature. Furthermore, there is provided a system in which water enters from the bottom and exits from the top instead of a separate chamber for mixing the water, and whereby a linear flow is obtained by ensuring that the water path does not change. Hot and cold water enter from the bottom and the mixed water exits from the top. Temperature and flow adjusting actions in the system are completely independent from each other. The movement in the ceramic disks can be realized only by the rotation movement.

### Summary of the Invention

The objective of the present invention is to realize a cartridge which enables turning on/off of the faucet at the desired temperature during use of a faucet by making the temperature adjusting once and later performing only the flow control.

Another objective of the invention is to realize a cartridge where a linear flow is obtained by the hot and cold water entering from the bottom and the mixed water exiting from the top.

A further objective of the invention is to realize a cartridge which provides saving in energy, water, time and ease in use.

### Detailed Description of the Invention

The cartridge realized to fulfill the objectives of the present invention is illustrated in the accompanying figures, in which;

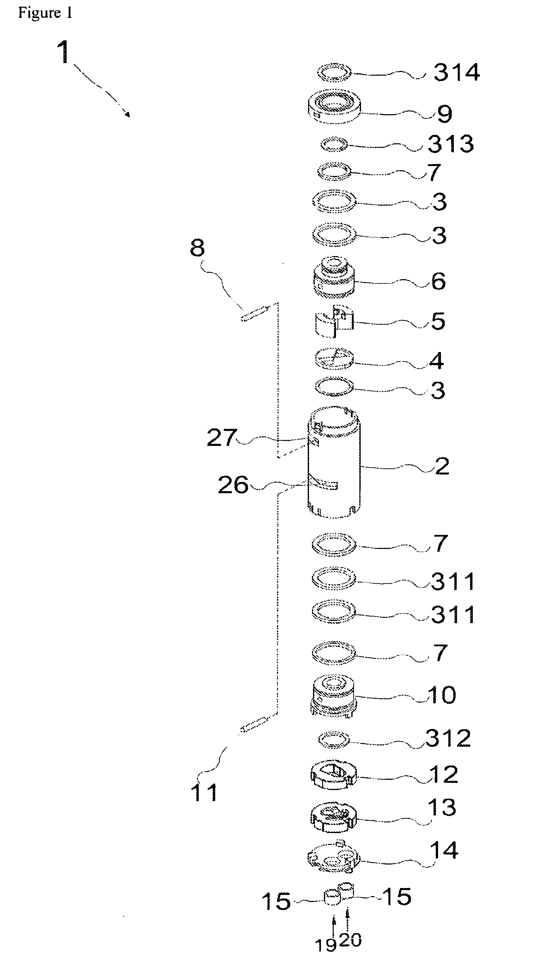

Figure 1 is the exploded view of the cartridge.
Figure 2 is the exploded view of the ceramic disk provided in the cartridge.
Figure 3 is the exploded view of the temperature adjusting element provided in the cartridge.
Figure 4 is the perspective view of the cartridge form holes.
Figure 5 is the exploded view of the movement channels and tabs of the cartridge.
Figure 6 is the exploded view of the cartridge shafts and fastening holes.
Figure 7 is the exploded view of the tabs and tab channels of the cartridge.

The components shown in the figures are numbered as follows:
1. Cartridge
2. Body
3. 311., 312., 313., 314. O-ring
4. Flow fixed ceramic disc
5. Flow moveable ceramic disc
6. Flow adjusting element
7. Teflon Seal
8. Flow adjusting shaft
9. Upper cap
10. Temperature adjusting element
11. Temperature adjusting shaft
12. Movable ceramic disk
13. Fixed ceramic disk
14. Lower cap
15. Gasket
161., 162., Leg
171., 172., Channel
18. Lower leg
19. Hot water inlet
20. Cold water outlet
21. 211. Tab
22. 221. Form Hole
23. Tab channel
24. Form structure
25. Form holes
26. Temperature Adjusting Shaft Movement Channel
27. Flow Adjusting Shaft Movement Channel
28. Body Tabs
29. Upper Cap Channels
30. Temperature Adjusting Shaft Fastening Hole
31. Flow Adjusting Shaft Fastening Hole
   The cartridge (1) essentially comprises a lower cap (14) which is provided at the bottom and enables hot and cold water to enter into the cartridge together,
   a temperature adjusting element (10) which performs temperature adjustment of the hot and cold mixed water entering into the cartridge (1) from the lower cap (14),
   at least one temperature adjusting shaft (11) which is connected to the temperature adjusting element (10) and adjusts the temperature of the mixed water with its right/left movement,
   a flow adjusting element (6) which adjusts the flow of the mixed water whose temperature is adjusted,
   at least one flow adjusting shaft (8) which is connected to the flow adjusting element (6) and adjusts the flow of the mixed water as desired with its right/left movement,
   and at least one upper cap (9) through which the water entering from the lower cap (14) exits in a linear manner.

In the inventive cartridge (1), the hot and cold water passing through the lower cap (14) and coming to the temperature fixed ceramic disc (13), is transmitted to the temperature adjusting element (10) with the right/left movement of the temperature adjusting shaft (11), and from there to the temperature moveable ceramic disc (12). Hot and cold water are mixed by means of the rotation of the temperature moveable ceramic disc (12) to right and left over the temperature fixed ceramic disc (13).

In the cartridge (1), the mixed hot and cold water passes through the flow adjusting element (6) and is conveyed to the flow fixed ceramic disc (4). The water arrives to the flow adjusting element (6) with the right/left movement of the flow adjusting shaft (8) and then it is transmitted to the flow moveable disc (5). Flow adjusting and opening and closing operations are performed by means of turning the flow moveable ceramic disc (5) to right and left over the flow fixed ceramic disc (4). Water exits from the upper cap (9).

In the inventive cartridge (1), minimum acoustic value is obtained with linear flow during adjustment of temperature and flow.

The o-rings (311) provided on the temperature adjusting element (10) prevent leakage of water from the temperature adjusting shaft movement channel (26) on the body (2) which defines the movement distance of the temperature adjusting shaft (11).

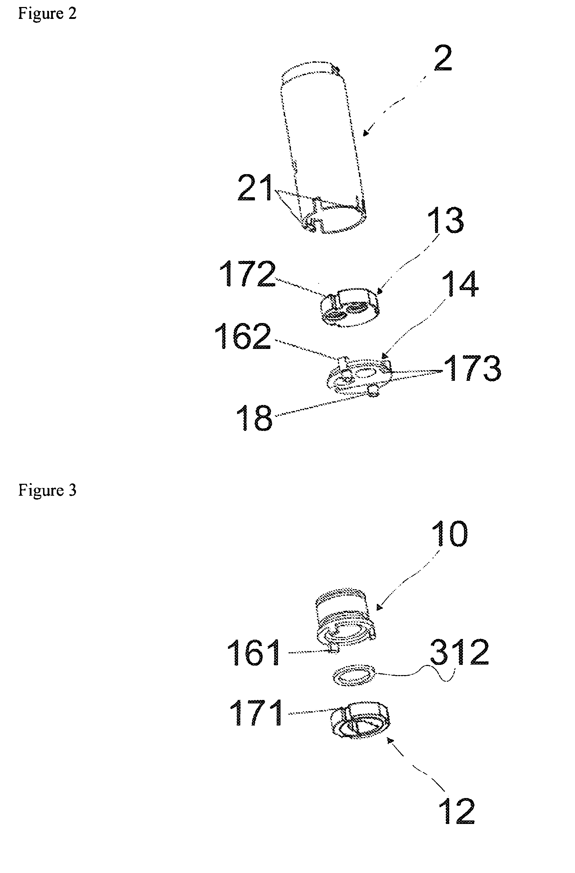

While the Teflon seals (7) on the temperature adjusting element (10) serve as bearings for the rotation movement of the temperature adjusting shaft (11), they also reduce friction. Furthermore, by fastening of the legs (161), which are located at the bottom of the temperature adjusting element (10), to the channels (171) on the moveable ceramic disc (12) in an axial direction, the rotation force coming from the temperature adjusting shaft (11) is conveyed to the moveable ceramic disc (12). Sealing between these two pieces is provided by an o-ring (312). (Figure 3)

The fixed ceramic disc (13) is secured to the body (2) by engagement of the legs (162) on the lower cap (14) to the channels (172) located on the fixed ceramic disc (13) and engagement of the tabs (21) on the body (2) to the channels (173) located on the lower cap (14). (Figure 2)

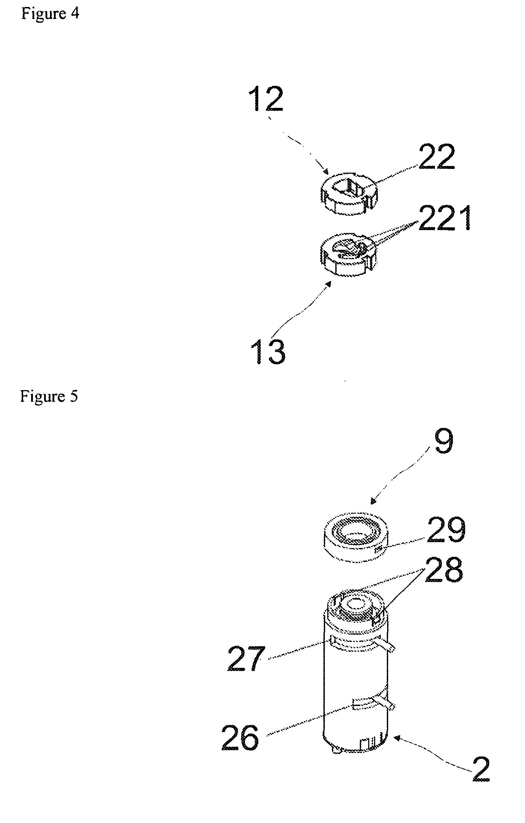

Upon positioning of the form holes (22) on the moveable ceramic disc (12) and the form holes (221) on the fixed ceramic disc (13) with the right/left rotation movement of the moveable ceramic disc (12), the mixture with the desired temperature is obtained. (Figure 4)

In the inventive cartridge (1), sealing between the fixed ceramic disc (13) and the moveable ceramic disc (12) is provided by the back force arising during squeezing of the seals (15).

The lower legs (18) at the bottom of the lower cap (14) are used for positioning and securing of the cartridge (1). Sealing is provided at the hot water inlet (25) and cold water inlet (26) by means of the gaskets (15).

The o-rings (3) on the flow adjusting element (6) prevent water leakage from the flow adjusting shaft movement channel (27) on the body (2) which defines the movement distance of the flow adjusting shaft (8).

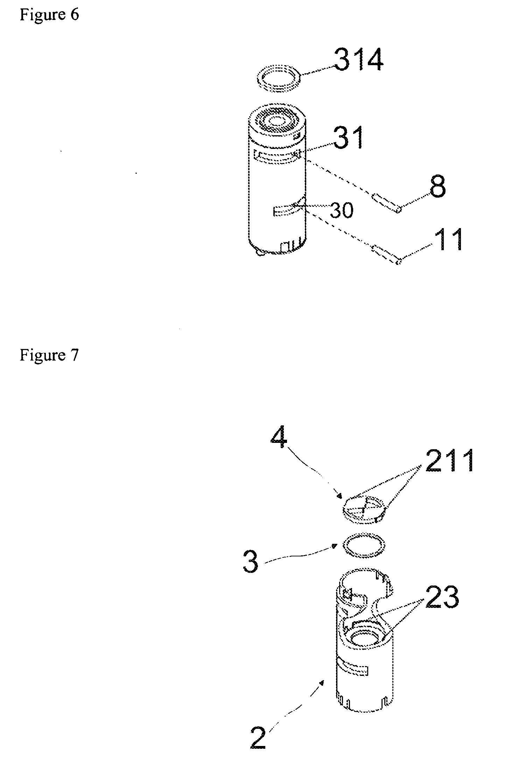

The tabs (211) provided on the edges of the fixed ceramic disc (4) can be fastened to the body (2) by engaging to the tab channels (23) located on the body (2). Sealing between the fixed ceramic disc (4) and the body (2) is provided by an oring (3). (Figure 7)

The legs at the bottom of the flow adjusting element (6) are fastened to the channels provided on the flow moveable ceramic disc (5). Thereby the flow moveable ceramic disc (5) and flow adjusting element (6) are enabled to rotate together by means of the flow adjusting shaft (8). By aligning the form structure (24) on the flow moveable ceramic disc (5) with the form holes on the fixed disc (4) by means of the rotation movement, flow adjustment and opening and closing control are provided by the flow adjusting shaft.

The Teflon seal (7) below the upper cap (9) serves as a bearing to the flow adjusting element (6) and minimizes friction. The o-ring (313) between the upper cap (9) and the flow adjusting element (6) and the o-ring on the upper cap (9) provide sealing in the use of the cartridge (1). The body tabs (28) on the body (2) can be fastened to the upper cap channels (29) located on the side of the upper cap (9). (Figure 5)

During assembly of the cartridge (1), upon transmission of the pressing force coming from the press nut to the temperature adjusting element (10), the o-ring is squeezed between the fixed ceramic disc (13) and the body (2), and thus sealing is provided. Additionally this pressing force also enables to obtain the force that will provide sealing between the fixed ceramic disc (13) and moveable ceramic disc (12).

In the cartridge (1), the temperature adjusting shaft (11) is mounted to the fastening hole (30) on the temperature adjusting element (10), and the flow adjusting shaft (8) is mounted to the fastening hole (31) on the flow adjusting element (6). (Figure 6)

It is possible to develop various embodiments of the invention within the scope of the fundamental principles described herein. The inventive cartridge (1) can not be limited to the examples provided above for a better understanding of the invention. The invention is essentially according to the claims.

## Claims

1. A cartridge (1) **comprising** a lower cap (14) through which hot and cold water enter into the cartridge together, a temperature adjusting element (10) which performs temperature adjustment of the hot and cold mixed water entering into the cartridge (1) from the lower cap (14), a flow adjusting element (6) which adjusts the flow of the mixed water whose temperature is adjusted, a temperature adjusting shaft (11) and a flow adjusting shaft (8) by which flow and temperature adjustments are performed independently, **characterized by** at least one upper cap (9) through which the water entering from the lower cap (14) exits in a linear manner.

2. A cartridge (1) according to Claim 1 **characterized by** at least one temperature adjusting shaft (11) which is connected to the temperature adjusting element (10) and adjusts the temperature of the mixed water with its right/left movement.

3. A cartridge (1) according to Claim 1 and 2 **characterized by** at least one flow adjusting shaft (8) which is connected to the flow adjusting element (6) and adjusts the flow of the mixed water as desired with its right/left movement.

4. A cartridge (1) according to any of the preceding claims **characterized by** a moveable ceramic disc (12) comprising channels (171) that enable receiving the rotation force coming from the temperature adjusting shaft (11), upon fastening of the legs (161), which are located at the bottom of the temperature adjusting element (10), in an axial direction.

5. A cartridge (1) according to any of the preceding claims **characterized by** a flow fixed ceramic disc (4) comprising tabs (211) that enable fastening to the body (2) by engaging to the tab channels (23) located on the body (2).

## Patentansprüche

1. Eine Kassette (1) **umfassend** einen unteren Deckel (14), wodurch heißes und kaltes Wasser zusammen in die Kassette eindringen; ein Temperaturregelelement (10), das die Temperaturregelung von dem in die Kassette (1) durch den unteren Deckel (14) eindringenden gemischten Warm-und Kaltwasser ausführt; ein Durchflussregelelement (6), das den Durchfluss von gemischtem Wasser regelt, dessen Temperatur angepasst ist; einen Temperaturregelschaft (11) und einen Durchflussregelschaft (8), mit dem der Durchfluss- und die Temperaturregelungen unabhängig vorgenommen werden, **gekennzeichnet durch** mindestens einen oberen Deckel (9), wodurch das vom unteren Deckel (14) eindringende Wasser in einer linearen Weise austritt.

2. Eine Kassette (1) nach Anspruch 1, **gekennzeichnet durch** mindestens einen Temperatur einstellenden Schaft (11), der an das Temperaturregelelement (10) angeschlossen ist und die Temperatur von gemischtem Wasser **durch** seine rechts/links-Bewegung regelt.

3. Eine Kassette (1) nach Anspruch 1, **gekennzeichnet durch** mindestens einen Temperatur einstellenden Schaft (8), der an das Temperaturregelelement (6) angeschlossen ist und die Temperatur von gemischtem Wasser **durch** seine rechts/links-Bewegung regelt.

4. Eine Kassette (1) nach einem der vorhergehenden Ansprüche, **gekennzeichnet durch** eine bewegbare Scheibe(12) umfassend Kanäle (171), die die Aufnahme der von dem Temperaturregelschaft (11) ausgehende Drehkraft ermöglichen, wobei die Füße (161) befestigt sind, die am unteren Rand des Temperaturregelelements (10) in einer axialen Richtung angeordnet sind.

5. Eine Kassette (1) nach einem der vorhergehenden Ansprüche **gekennzeichnet durch** eine feste Durchfluss-Keramikscheibe (4), welche Aufhänger (211) aufweist, die **durch** Eingriff in die für diese Aufhänger auf dem Hauptteil (2) angeordneten Kanäle (23) die Befestigung ermöglichen.

## Revendications

1. Une cartouche (1) **comportant** un clapet inférieur (14) par lequel de l'eau chaude et froide entre à l'intérieur de la cartouche ensemble, un élément régulateur de température (10) effectuant le réglage de la température de l'eau chaude et froide mixte entrant à l'intérieure de la cartouche (1) du clapet inférieur (14), un élément régulateur de flux (6) ajustant le flux de l'eau mixte dont la température est ajustée, un arbre régulateur de flux (8) par lequel des ajustements de flux et de température sont effectués indépendamment, **caractérisée par** au moins un clapet supérieur (9) par lequel de l'eau entrant du clapet inférieur (14) sort dans une manière linéaire.

2. Une cartouche (1) selon la revendication 1, **caractérisée par** au moins un arbre régulateur de température (11) relié à l'élément régulateur de température (10) et ajustant la température de l'eau mixte par son mouvement droite/gauche.

3. Une cartouche (1) selon les revendications 1 et 2, **caractérisée par** au moins un arbre de réglage de flux (8) relié à l'élément régulateur de flux (6) et ajustant le flux de l'eau mixte comme désiré avec son mouvement droite/gauche.

4. Une cartouche (1) selon l'une quelconque des revendications précédentes, **caractérisée par** un disque céramique mobile (12) comportant des canaux (171) permettant la réception de la force de rotation provenant de l'arbre régulateur de flux (11), sur la fixation des pieds (161) situées au fond de l'élément régulateur de température (10) dans une direction axiale.

5. Une cartouche (1) selon l'une quelconque des revendications précédentes, **caractérisée par** un disque céramique à flux fixe (4) comportant des onglets (211) permettant la fixation du corps (2) par l'engagement des canaux d'onglet (23) situés sur le corps (2).
